# FASCICULE DE BREVET EUROPEEN

(11) **EP 1 281 136 B1**
(45) Date de publication et mention de la délivrance du brevet: **20.08.2003**
(21) Numéro de dépôt: 01934086.8
(22) Date de dépôt: 11.05.2001
(51) Int. Cl.: G06F 17/50

(54) **PROCEDE DE CONCEPTION NUMERIQUE TRIDIMENSIONNELLE DE VETEMENT**
VERFAHREN ZUM DREIDIMENSIONALEN DIGITALEN ENTWERFEN VON KLEIDUNGSSTÜCKEN
METHOD FOR THREE-DIMENSIONAL DIGITAL DESIGNING OF GARMENT

(30) Priorité: 12.05.2000 FR 0006069
(43) Date de publication de la demande: 05.02.2003
(73) Titulaire: Société Civile T.P.C. International, 75008 Paris (FR)
(72) Inventeur: KUNG, Alexandre, Keung-Lung, F-75008 Paris (FR); MANDARD, Arnaud, Fernand, Philippe, Gabriel, F-92250 La Garenne Colombes (FR)
(74) Mandataire: Colas, Jean-Pierre
(86) Numéro de dépôt international: FR0101422
(87) Numéro de publication internationale: WO01086512

(56) Documents cités:
- US-A- 5 495 568
- US-A- 5 850 222
- CAPIN T K ET AL: "A DEAD-RECKONING ALGORTIHM FOR VIRTUAL HUMAN FIGURES" ALBUQUERQUE, MAR. 1 - 5, 1997,LOS ALAMITOS, IEEE COMP. SOC. PRESS,US, 1 mars 1997 (1997-03-01), pages 161-169, XP000852332 ISBN: 0-7803-3948-7
- NARIYAMA K ET AL: "REALISTIC 3D SYNTHESIS OF HUMAN BODY MOVEMENTS FOR VIRTUAL SPACE TELECONFERENCING" PROCEEDINGS OF THE IASTED INTERNATIONAL CONFERENCE. MODELLING AND SIMULATION, avril 1999 (1999-04), XP000933832

## Description

La présente invention concerne un procédé de conception numérique tridimensionnelle de vêtement.

La notion d'aisance, dans un vêtement, correspond à l'écart, en un point ou sur une zone donnée du corps, entre les mesures du corps à recouvrir et les mesures du vêtement proprement dit destiné à l'habiller, ce tant pour assurer l'absence totale de gêne au porter tout en sauvegardant les aplombs de bien aller, que pour conférer la silhouette souhaitée. Cette ampleur de nécessité technique comme d'apport de style (volume, galbe) doit, par extension, tenir compte des couches d'habillement intermédiaires ayant elles-mêmes leurs exigences de confort et d'allure.

Traditionnellement, ce développement, cet élargissement est obtenu soit par ajout sur le patronage même à tel ou tel niveau, sur telle ou telle zone, d'un accroissement à la mesure retenue pour la construction, soit par moulage sur mannequin vivant ou en bois d'une toile de mode en recherche simultanée du « mouvement » propre à la silhouette voulue ainsi que des aisances et aplombs de bien aller, chacune de ces deux méthodes pouvant d'ailleurs se compléter. Elles restent, par leur approche, relativement empiriques et longues.

Lorsqu'il s'agit de réaliser, pour un individu donné, un vêtement à ses mesures, dans une approche de tailleur ou de couturière, ces prises en compte d'aisance, d'ampleur et de nécessité d'emboîtement adéquat, impliquent un ou plusieurs essayages permettant les réglages voulus des morceaux de tissus les uns par rapport aux autres par des ajustements et épinglages multiples avec un degré relatif de précision et une perte de temps importante tant pour le client que pour le professionnel pratiquant l'essayage.

Un certain nombre de procédés de traduction informatisée de ces approches traditionnelles existent en construction CAO-DAO de patronage en deux dimensions (2D). Cet apport de technologie utilisée dans un raisonnement strictement identique à l'approche traditionnelle laisse entier l'empirisme de la traduction des besoins d'aisance et d'ampleur, avec des répercussions sur l'insécurité de bien-aller de la construction ainsi obtenue, obligeant la plupart du temps à la réalisation de « contre-typages » de contrôle, voire de correction, augmentant coûts et délais.

L'invention vise à fournir un procédé de conception numérique de vêtement qui permette de s'affranchir des inconvénients des approches traditionnelles comme de ceux des procédés informatisés connus en supprimant à peu près complètement la nécessité de procéder à des contrôles, essayages ou similaires consécutivement à l'élaboration numérique du vêtement sur ordinateur.

A cet effet, l'invention a pour objet un procédé de conception numérique de vêtement sur ordinateur, caractérisé en ce qu'il comprend les étapes consistant à :
a) importer des données numériques tridimensionnelles représentatives d'au moins une partie du corps d'un mannequin virtuel de travail,
b) élaborer des données numériques tridimensionnelles représentatives d'une structure virtuelle comprenant une série de lignes disposées chacune dans l'un de plusieurs plans de coupe transversaux et longitudinaux dudit corps de mannequin virtuel de travail, lesdites lignes étant en chaque point espacées d'une distance déterminée de la surface dudit corps,
c) générer et afficher sélectivement à partir desdites données numériques au moins une image d'au moins une zone de l'un au moins des éléments comprenant ladite structure virtuelle et ladite partie dudit corps de mannequin virtuel de travail,
d) modifier sélectivement en différents points de ladite structure virtuelle ladite distance entre lesdites lignes et ladite surface pour générer une structure virtuelle personnalisée représentative dudit vêtement, et à
e) modifier ladite image en fonction desdites modifications apportées à ladite structure virtuelle.

Selon d'autres caractéristiques de l'invention, ladite étape a) comprend :
a1) l'importation de données numériques tridimensionnelles représentatives d'au moins une partie d'un corps de mannequin virtuel spécifique,
a2) la modification sélective d'au moins un paramètre morphologique dudit corps de mannequin virtuel spécifique pour générer et afficher sélectivement au moins une partie dudit corps modifié constituant ledit corps de mannequin virtuel de travail.

Selon d'autres caractéristiques de l'invention, lesdites données numériques tridimensionnelles représentatives d'au moins une partie dudit corps de mannequin virtuel spécifique comprennent un ensemble de paramètres prédéterminés de dimension et de position angulaire dudit corps de mannequin virtuel spécifique et on modifie au moins l'un desdits paramètres.

Selon d'autres caractéristiques de l'invention, en réponse à la modification d'au moins l'un des paramètres prédéterminés de dimension et de position angulaire dudit corps de mannequin virtuel spécifique, on fait varier d'autres parmi lesdits paramètres prédéterminés de dimension et de position angulaire dudit corps de mannequin virtuel spécifique, conformément à une règle prédéterminée.

Il est ainsi possible de décliner le mannequin de travail dans toute la gamme de variation reconnue des dimensions et postures morphologiques qui, soit sont retenues comme des standards d'une population donnée tels qu'ils ressortent des enquêtes périodiques conduites en ce domaine, soit sont saisies à partir des mensurations et profils d'attitude pris sous une forme ou sous une autre sur un sujet donné en particulier.

Le procédé selon l'invention s'applique donc aussi bien sur un mannequin unique considéré comme de référence, que sur une série de mannequins de travail représentatifs d'une gamme de développement de tailles différentes intégrant ou non des variations d'attitudes comme de conformations, mais aussi sur des mannequins de travail représentatifs de diverses morphologies ethniques ou encore sur des mannequins de travail individualisés par le transfert préalable des données dimensionnelles et d'attitude spécifiques à un ou à des clients spécifiques.

Le procédé selon l'invention permet, sur un mannequin virtuel 3D pris comme référence, de créer directement en trois dimensions sur cette forme une sous-couche virtuelle d'épaisseur variable selon les points clés de construction et les zones d'aisance et de galbe prédéterminées à volonté, d'en vérifier de visu le bien-fondé, d'y apporter ponctuellement les modifications de valeur souhaitées, d'obtenir ainsi directement une structure ou coque, conforme dans son volume et ses lignes au modèle vestimentaire recherché sans avoir à y apporter des retouches ultérieures, et d'exporter in fine les coordonnées externes de construction vers un système de réalisation de patronages en CAO.

Ce procédé s'applique à tout type de conception et/ou construction de vêtement, quel que soit son style, qu'il soit moulant, ajusté, large ou ample, dans sa globalité ou relativement à telle ou telle partie constituante, à destination de l'Homme, de la Femme comme de l'Enfant.

Ce procédé permet en outre de tenir compte, par approches successives, de superpositions de sous-couches additionnelles, par le fait de vêtements se portant les uns sur les autres, et/ou par l'épaisseur propre caractérisant telle matière incorporée (fourrure, ouatinage,...). De même, il permet de tenir compte de façon très précise des marges d'aisance nécessaires et suffisantes pour tous les vêtements techniques en fonction de leurs spécificités d'emploi (Vêtements de survie par exemple).

Le procédé selon l'invention comprend en outre une ou plusieurs des caractéristiques suivantes, considérées seules ou en combinaison :
- le procédé comprend l'étape consistant à adapter automatiquement lesdites données numériques représentatives de ladite structure virtuelle en réponse à ladite modification d'au moins un paramètre morphologique dudit corps de mannequin virtuel spécifique ;
- le procédé comprend l'étape consistant à rapporter au moins un volume de forme déterminée à la surface dudit corps de mannequin virtuel spécifique et à adapter automatiquement lesdites données numériques représentatives de ladite structure virtuelle en réponse à la modification dudit corps de mannequin virtuel spécifique par apport dudit volume ;
- ladite étape a1) comprend :
   a1-1) la capture en trois dimensions d'un corps volumétrique considéré comme de référence correspondant à un certain profil pour conduire à l'obtention d'un mannequin virtuel brut ;
   a1-2) le déplacement maîtrisé des « vertex » du maillage de ce mannequin virtuel brut, de manière à obtenir un mannequin virtuel déformable ; et
   a1-3) la transformation de ce mannequin virtuel déformable afin de lui conférer les caractéristiques spécifiques de mensurations et de profil d'une cible particulière d'individu ;
- on réalise ladite transformation à partir de paramètres morphologiques, ces paramètres étant sélectivement prélevés sur une personne vivante choisie comme base d'étude, ou choisis dans une base de données morphologiques ;
- ladite étape d) consiste à identifier lesdits points sur ladite image de ladite structure virtuelle et à commander sélectivement la modification de ladite distance auxdits points identifiés ;
- ladite étape d) comprend le lissage numérique de la surface de ladite structure virtuelle entre des points adjacents dont la distance audit corps de mannequin virtuel de travail a été modifiée sélectivement ;
- ledit procédé comprend l'étape consistant à tracer sur ladite image de ladite structure virtuelle et à mémoriser des lignes d'ouverture de ladite structure virtuelle pour la mise à plat en deux dimensions dudit vêtement.

D'autres caractéristiques et avantages de l'invention ressortiront de la description qui va suivre d'un exemple illustré par les dessins annexés sur lesquels :
- les figures 1A, 1B sont des vues en élévation frontale et latérale d'un corps de mannequin masculin numérisé ;
- la figure 2 est une vue en élévation latérale illustrant les paramètres de position angulaire des différentes parties du corps de mannequin masculin des figures 1A et 1B ;
- la figure 3 est une vue en perspective d'une série de coupes du corps de la figure 2;
- les figures 4 et 5 sont des vues en perspective en élévation et de dessus illustrant un certain nombre de plans verticaux de coupe du corps de mannequin ;
- la figure 6 est une vue en perspective d'une partie du corps de mannequin illustrant une étape de construction d'un vêtement au moyen du procédé selon l'invention ;
- la figure 7 est une vue en coupe du corps de mannequin au niveau des emmanchures ;
- les figures 8 et 9 sont des vues en perspective illustrant la conception des emmanchures d'un vêtement par le procédé selon l'invention ;
- la figure 10 est une vue en coupe analogue à la figure 7 ;
- les figures 11 et 12 sont des vues partielles en perspective illustrant la superposition d'une structure de vêtement sur le corps de mannequin ;
- les figures 13 à 15 sont des vues partielles en perspective illustrant une structure de vêtement en l'absence du corps de mannequin ;
- la figure 16 est une vue en perspective illustrant une demi-représentation d'une structure maillée et une demi-représentation texturée d'une même structure de vêtement sur le corps de mannequin ;
- la figure 17 illustre une fenêtre d'aide quant à l'attitude à sélectionner pour conférer au mannequin virtuel de travail une attitude identique à celle du modèle de référence ;
- les figures 17A et 17B sont des figures analogues aux figures 1A et 1B, mettant en évidence d'autres plans de coupe du corps de mannequin masculin ;

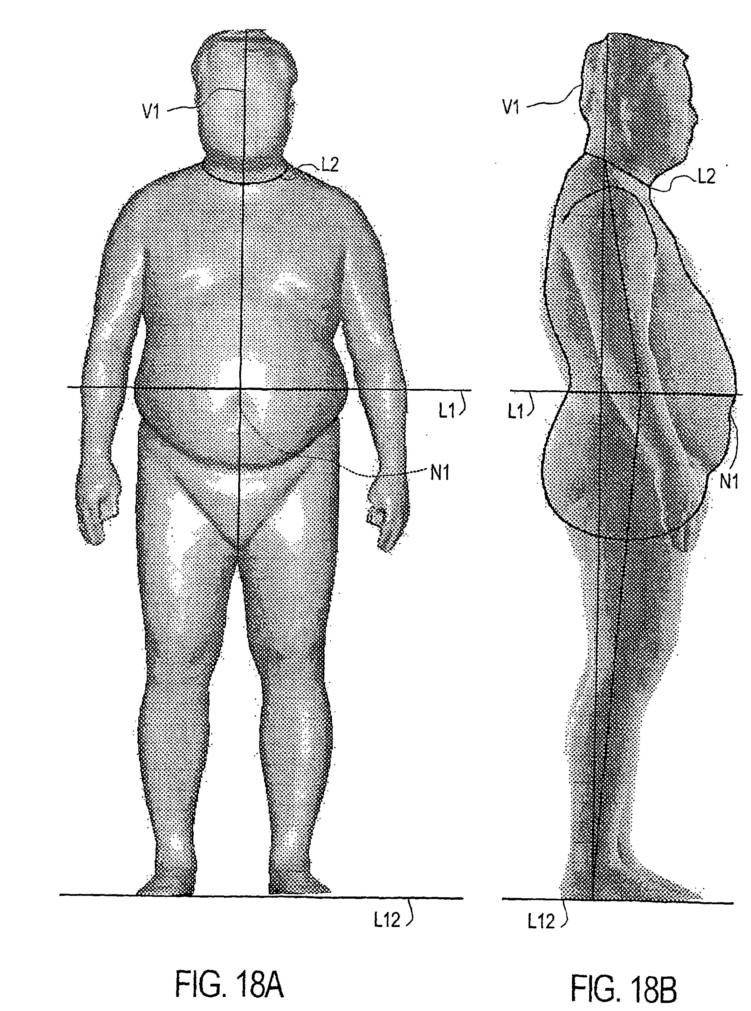

- les figures 18A et 18B illustrent un corps de mannequin relativement gros ;
- les figures 19 et 20 illustrent le passage du corps de mannequin des figures 1A, 1B au corps de mannequin des figures 18A, 18B ;
- les figures 21A et 21B sont des vues en élévation frontale et latérale d'un corps de mannequin féminin numérisé ;
- les figures 22A et 22B représentent des tableaux types d'échelles de variation de paramètres morphologiques, et
- la figure 23 est un schéma indiquant la cinématique de combinaison de paramètres clés permettant d'obtenir un corps de mannequin virtuel spécifique.

Dans une première phase du procédé selon l'invention, on passe, grâce à une succession d'étapes de traitement, de l'importation :
- soit la représentation scannée en trois dimensions d'une personne vivante choisie comme base d'étude ou comme étant représentative d'une morphologie donnée,
- soit de données morphologiques extraites d'une base de données construite à partir d'une enquête spécifique de population ou de clientèle, ces données étant classées selon des profils morphologiques prédéterminés,
à un mannequin virtuel spécifique des données de mensuration et de profil authentiquement représentatif de son groupe.

Pour mener à bien cette première phase, on commence par numériser en trois dimensions, à partir de données précises de mensurations et de profils, un corps vivant type. On obtient de la sorte un mannequin virtuel brut de volume et d'attitude identiques.

Ensuite, pour obtenir toute la souplesse voulue dans les transformations/adaptations ultérieures de modélisation de ce mannequin virtuel brut, il est procédé, à partir de sa topologie de maillage, à un déplacement maîtrisé des « vertex », c'est-à-dire des points de jonction de chaque maille. On obtient de la sorte un mannequin virtuel déformable.

On fait alors subir à ce mannequin virtuel déformable des transformations permettant de lui conférer les caractéristiques spécifiques de mensurations et de profil d'une cible particulière d'individu correspondant à l'étude à réaliser.

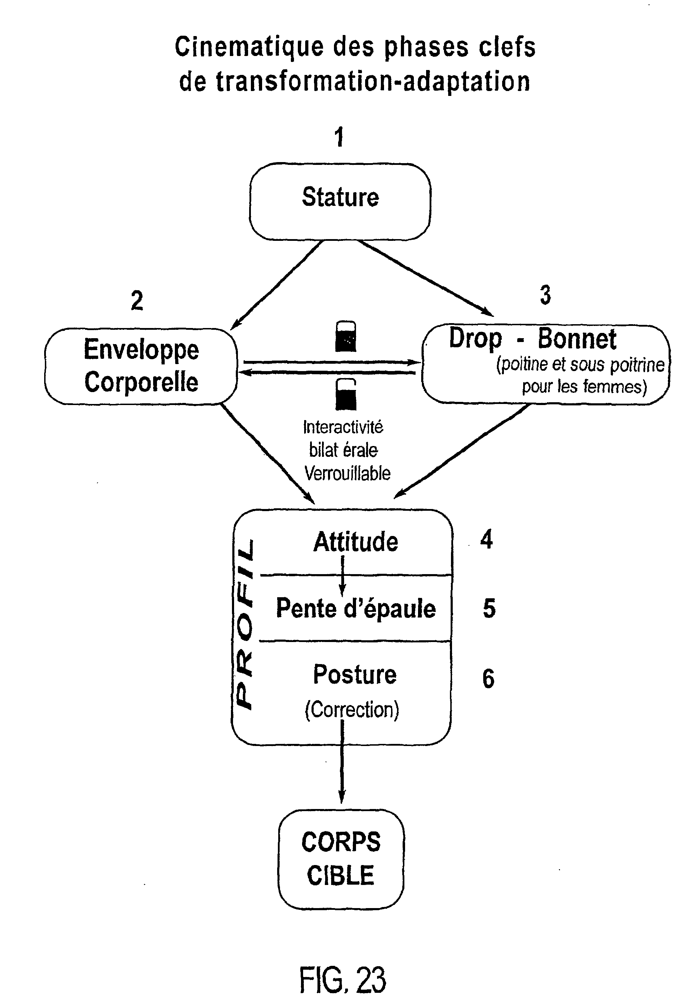

Cette opération est la résultante de la combinaison, selon une cinématique d'enchaînement illustrée à la figure 23, de quatre types de paramètres clés de caractérisation, ces paramètres étant soit prélevés sur la personne vivante choisie comme base d'étude lors du scannage de son corps en trois dimensions, soit choisis dans la base de données morphologiques susmentionnée.

Ces quatre types de paramètres clés sont les suivants :
1. Paramètres d'appartenance : tranche d'âge et sexe ;
2. Paramètres volumétriques : définis comme étant la variation en plus ou en moins de la masse volumétrique horizontale du corps dans toutes ses zones (cou, tronc (poitrine-ceinture-bassin), membres supérieurs et inférieurs hors points externes osseux d'articulation), selon une répartition 1/3 profil arrière et 2/3 profil avant tel que défini plus loin dans la présente description ;
3. Paramètres dimensionnels :
   - la stature, définie comme étant la distance verticale exprimée en cm entre le sommet du crâne et la plante des pieds au sol,
   - la proportion entre la hauteur tête-tronc et la hauteur d'entrejambes ;
4. Paramètres angulaires :
   - l'attitude, définie comme étant caractéristique des différents « profils d'attitude » pouvant se rencontrer: voussure ou redressement du dos, cambrure de taille, basculement des fessiers rentrés ou ressortis, ouverture ou fermeture de la forme des épaules. L'attitude se traduit par des « écarts angulaires» aux points d'intersection des axes de sustentation et des plans de coupé horizontale correspondants ;
   - la pente d'épaule, définie comme étant caractéristique des différents « profils d'épaule » pouvant se rencontrer : épaule haute ou basse. Elle se traduit par un angle par rapport à l'horizontale ;
   - la posture, définie comme étant caractéristique de la « tenue d'équilibre » du corps suite aux interférences précédentes au regard du centre de gravité pour assurer la stabilité de la tenue « debout ». Cette correction d'ajustement progressif se réalise selon une loi mathématique prédéterminée à paramètres anthropométriques.

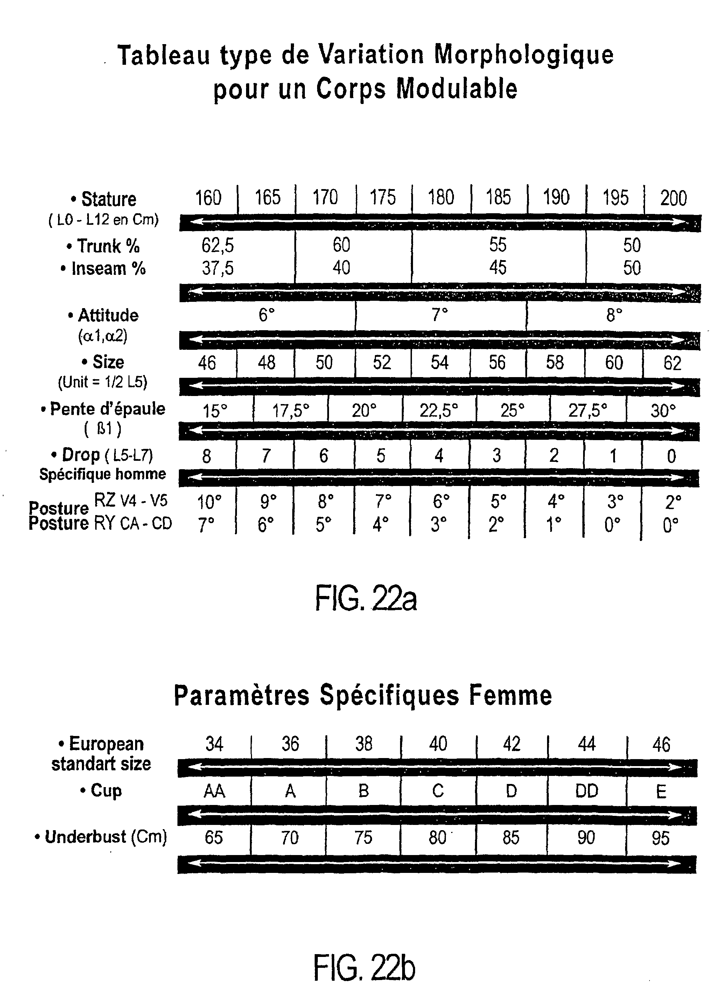

On a représenté sur les figures 22A et 22B deux tableaux types des échelles de variation de chacun de ces paramètres, correspondant à un profil déterminé.

A l'issue de cette première phase du procédé selon l'invention, on obtient donc un mannequin virtuel spécifique hautement représentatif se son groupe.

Dans une deuxième phase du procédé selon l'invention il convient d'affiner, d'adapter, de modifier ce mannequin virtuel spécifique pour le rendre conforme au choix morphologique retenu pour le mannequin de travail sur lequel un vêtement sera conçu, tant au regard des facteurs dimensionnels que des paramètres d'écarts angulaires (degré de verticalité de l'individu ou de la population cible caractéristique de son attitude en position naturelle ou par compensation de silhouette de conformation).

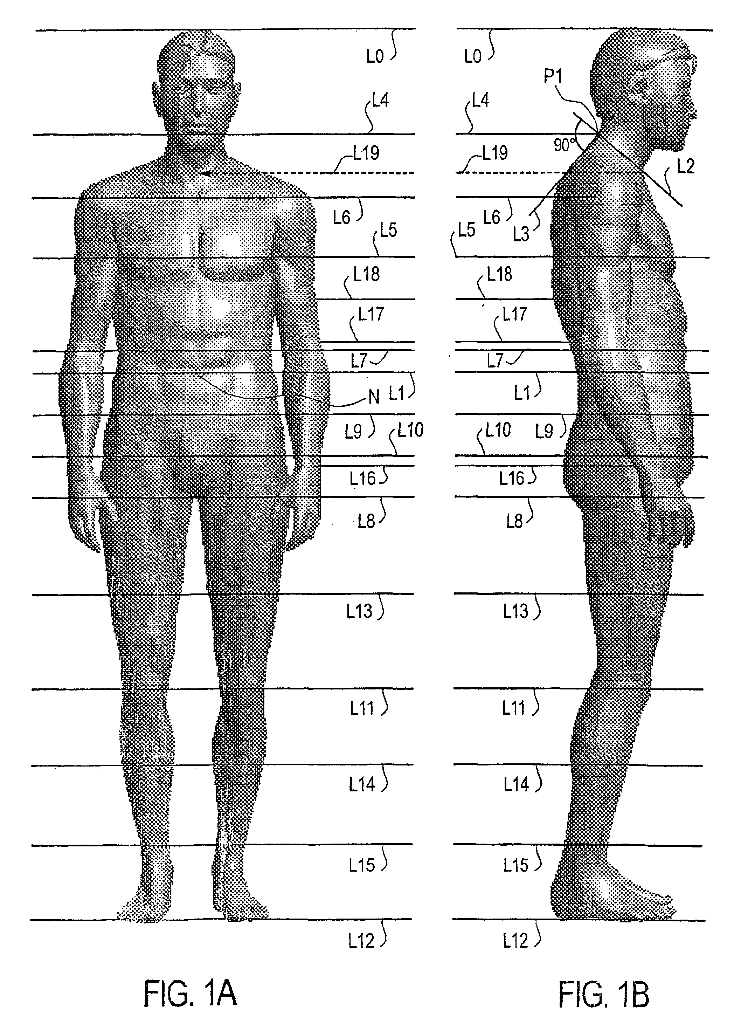

Pour ce faire, il convient d'agir sur certains des paramètres susmentionnés, lesquels vont à présent être définis avec plus de précision en se référant aux figures 1A, 1B, 2, 3 17A, 17B, 18A, 18B, 19, 20, 21A, et 21B.

La définition de ces paramètres implique le positionnement de différents plans horizontaux de construction en relation directe avec la population à habiller (masculinelféminine, adulte/enfant) en fonction de la stature du mannequin virtuel spécifique.

La ligne L0 correspond à la stature (hauteur) du corps de référence en position ou attitude considérée comme normale.

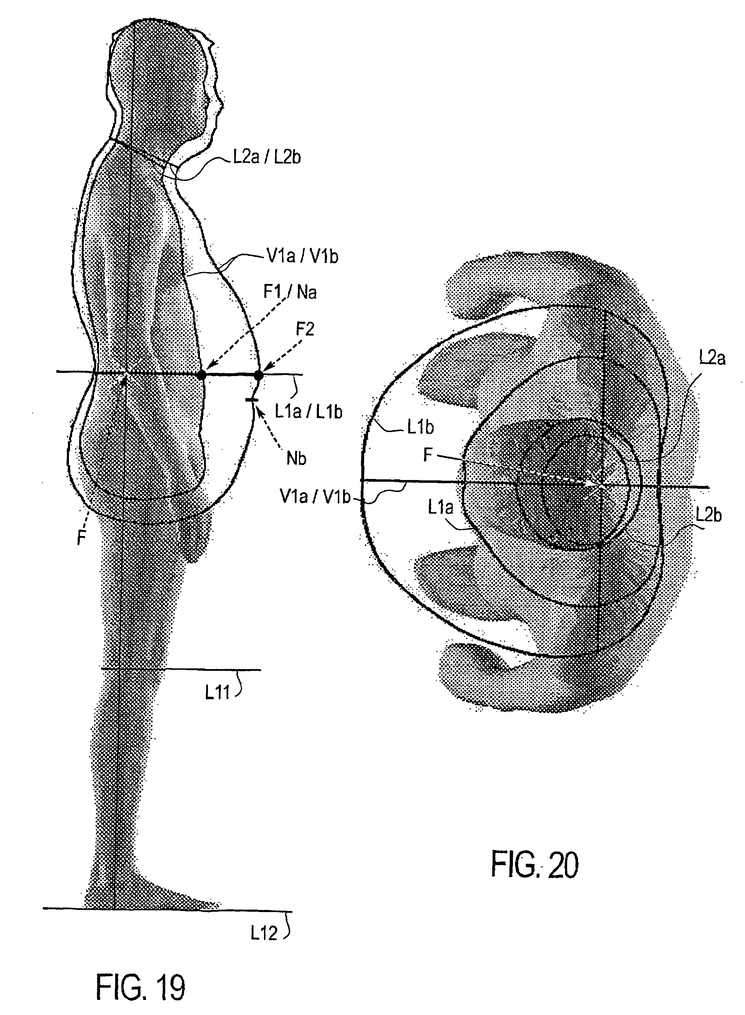

Un plan de coupe de référence de l'ensemble de la structure est situé à la hauteur du nombril N, ce plan étant identifié par sa trace L1. Ce plan horizontal L1 est par ailleurs traversé par l'axe vertical A1 passant par le centre de gravité du corps (point fixe F - voir notamment figures 19 et 20) situé à 2/3 du profil avant et 1/3 du profil arrière.

Un deuxième plan définit la ligne d'encolure L2 prenant son origine au creux sous-tyroïdien et formant avec la ligne de pente de dos L3 un angle de 90° dont le sommet définit le point P1 de hauteur d'encolure dos (voir notamment figure 1B). Ce point P1 peut bouger dans l'espace selon l'attitude du haut du tronc, comme cela sera indiqué plus avant, et définit la position du plan L4 de hauteur d'encolure dos.

La ligne L4 est positionnée sous le menton du mannequin.

La ligne L5 de butée de creux d'emmanchure est positionnée par contrainte physique.

La ligne L6 de plan de coupe de largeur d'épaule est positionnée à mi-distance entre les lignes L4 et L5.

La ligne L7 de plan de coupe de taille est située à 1/10 de la distance entre les lignes L1 et L4, au-dessus de L1.

La ligne L8 de plan de coupe de butée d'entrejambes est positionnée par contrainte physique.

Les lignes de plan de coupe de hanches L9 et de bassin L10 sont situées respectivement à 1/3 et 2/3 de la distance entre les lignes L1 et L8, à partir de la ligne de nombril L1.

La construction des jambes dépend d'une mesure clé fondamentale, celle de l'entrejambes.

La ligne L11 de plan de coupe de hauteur de genoux est positionnée à mi-distance du plan d'assise des pieds (ligne L12) et de la ligne de bassin L10.

La ligne L13 de plan de coupe de hauteur de cuisse est positionnée à mi-distance des plans d'entrejambes L8 et de la ligne de genoux L11.

La ligne L14 de plan de coupe de mollet est positionnée à 1/3 de la distance entre les lignes de genoux L11 et d'assise des pieds L12, à partir de la ligne L11.

La ligne L15 de plan de coupe de cheville est positionnée aux 2/3 de la distance entre la ligne de genoux L11 et la ligne L12 d'assise des pieds, à partir de la ligne L11.

Pour la construction des bras, la longueur du bras (distance entre la pointe d'épaule et le bord inférieur de l'apophyse cubitale) est saisie soit par appel à la base de données morphologiques standards, par sélection de la stature et de la corpulence, soit par saisie de mensuration directe.

Deux plans de coupe se placent naturellement en position : celui du niveau des poignets L16 et celui du niveau des coudes L17.

Le plan de coupe L18 au niveau des biceps est disposé à mi-distance entre la ligne L5 de butée de creux d'emmanchure et la ligne L17 des coudes.

Le plan de coupe de mi-avant bras est placé à mi-longueur de la distance entre les lignes de coudes L17 et de poignets L16.

La ligne de poitrine L23 passe par le bout des seins du mannequin.

La ligne de carrure L22 (hors bras) est située au 1/4 de la distance entre la ligne L23 et la ligne L4, à partir de la ligne L23.

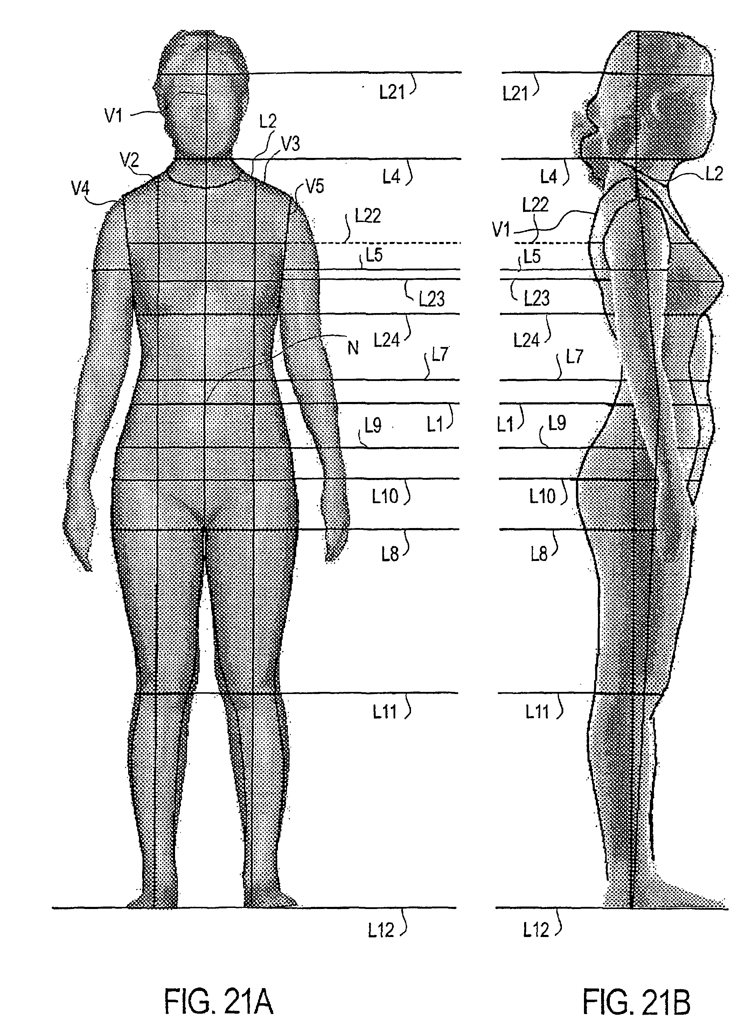

La ligne de sous-poitrine L24 (mannequin féminin - voir figures 21A et 21B) est placée en butée sous les seins.

La ligne de mi-cuisse L25 est située au 1/3 de la distance entre les lignes L11 et L8, à partir de la ligne L8.

Enfin, s'il est souhaité de décliner le mannequin virtuel de travail sur une gamme de variation faisant jouer d'un côté la stature, avec ou sans modification du degré d'inclinaison, de l'autre le demi-tour de poitrine avec ou sans modification du « drop » (différence entre le 1/2 tour de poitrine et le 1/2 tour de taille pour l'homme), il est possible d'obtenir ainsi successivement et automatiquement l'ensemble des mannequins ainsi déclinés de la gamme demandée, en relation avec la base de données morphologiques standards.

L'intégration d'interactions angulaires d'attitude constitue l'un des points importants du processus de construction volumétrique d'un corps de travail.

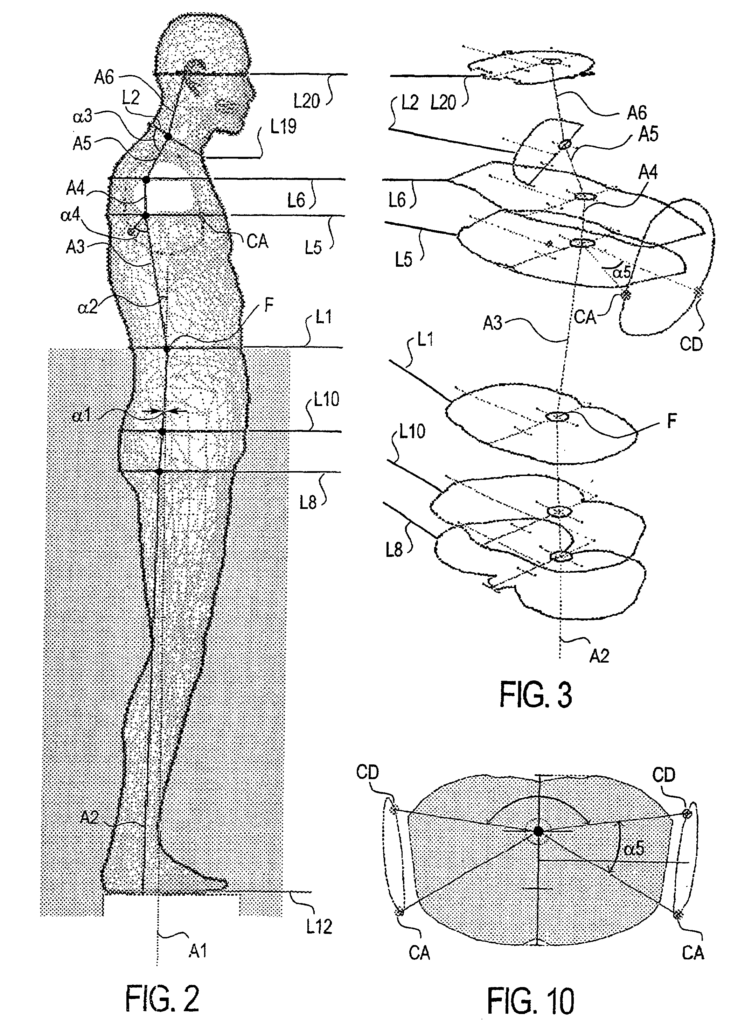

Comme le montrent les figures 2 et 3, par rapport à la verticale A1 passant par le centre de gravité du corps situé dans le plan L1 de nombril à 2/3 du profil avant et 1/3 du profil arrière, selon l'attitude du sujet (ou de la morphologie ethnique concernée) en fonction de sa posture naturelle comme de l'incidence de sa conformation, les axes de sustentation effectifs A2, A3, A4, A5, A6 sont décalés d'un certain angle, tant en partie inférieure (α1) qu'en partie supérieure (α2 par exemple), de part et d'autre de la ligne L1 du plan de nombril, pour assurer l'équilibre.

Les points d'intersection des axes de sustentation A2, A3, A4, A5, A6 avec les plans de coupe L12, L10, L11, L5, L6, L2, L20 (plan des yeux) sont disposés à 2/3 du profil avant et 1/3 du profil arrière, chaque sommet correspondant à un écart angulaire en interaction avec la variation du précédent et du suivant. Ceci explique les différents profils d'attitude que l'on peut observer en pratique telle que cambrure de la taille, voussure ou redressement du dos, avec entraînement de l'ouverture ou de la fermeture de la ligne de carrure et de la ligne d'épaules.

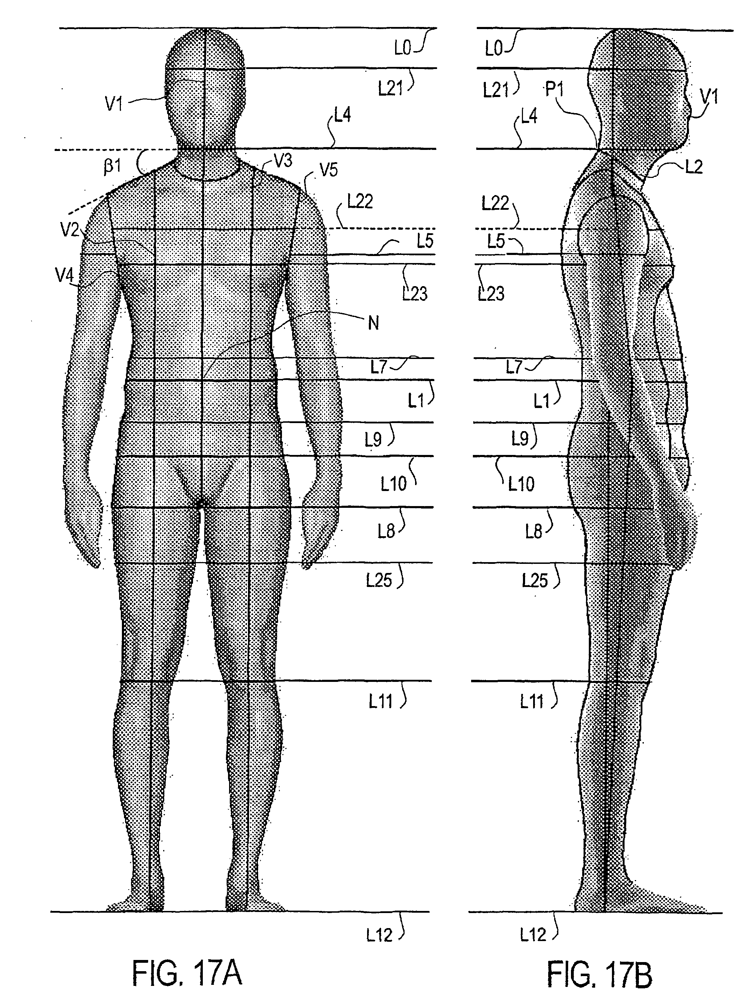

Comme cela a été mentionné plus haut, on peut également prendre en compte la pente d'épaule, définie par un angle β1 par rapport à l'horizontale (voir figure 17A).

Il résulte de ce qui précède que toute modification de stature ou d'attitude du corps de mannequin virtuel spécifique, induite par une modification de l'angle fait par l'un des axes de sustentation avec la verticale, se traduit par une modification d'un ou des autres angles selon une loi prédéterminée. De même, certaines modifications de paramètres dimensionnels peuvent engendrer des variations de paramètres angulaires selon une règle prédéterminée visant à compenser tout déplacement du centre de gravité de la partie du corps dont les dimensions ont été modifiées.

Afin d'aider le concepteur de la structure quant à la posture à conférer au corps du mannequin de travail, il peut faire appel, comme représenté à la figure 17, sur l'écran de son ordinateur, à une fenêtre figurant tous les types d'attitude compatibles avec la station debout (échelle de graduation d'attitude angulaire). En sélectionnant l'une des silhouettes, les paramètres angulaires de sustentation, dont il a été question à propos des figures 2 et 3, sont affichés et répercutés sur le corps du mannequin de travail sous commande du concepteur.

L'exemple pris ici comme base de démonstration repose sur un mannequin de référence caractérisé par les paramètres essentiels suivants:
- Homme,
- Stature : 177 cm,
- Taille : 50 cm (tour de poitrine 100 cm),
- Drop : 8 cm,
- Degré d'inclinaison angulaire (voir figure 2) :
   - zone supérieure au-dessus du plan L1 : α2 (angle défini entre les lignes A1 et A3) : 7°5,
   - zone inférieure au-dessous de L1 : α1 (angle défini entre les lignes A1 et A2) : 3°.

Comme cela est illustré par les figures 19 et 20, on peut modifier à volonté la corpulence du mannequin de travail. Sur cette figure, les éléments relatifs à un mannequin « mince » portent l'indice a, et ceux relatifs à un mannequin « gros » portent la référence b : on voit que la modification de corpulence entraîne la modification de la position d'un certain nombre de points caractéristiques, et notamment la modification de la position du nombril (F1, F2).

Le point F2 ne symbolise en fait plus réellement la position du nombril puisqu'il est nécessaire de prendre en considération un affaissement des masse dû à la prise de poids importante dans cet exemple. Le nombril du corps b est en fait situé en Nb.

Le corps de travail élaboré comme décrit ci-dessus permet de générer une structure de vêtement, c'est-à-dire un ensemble de lignes de contour placées préférentiellement dans les différents plans envisagés précédemment.

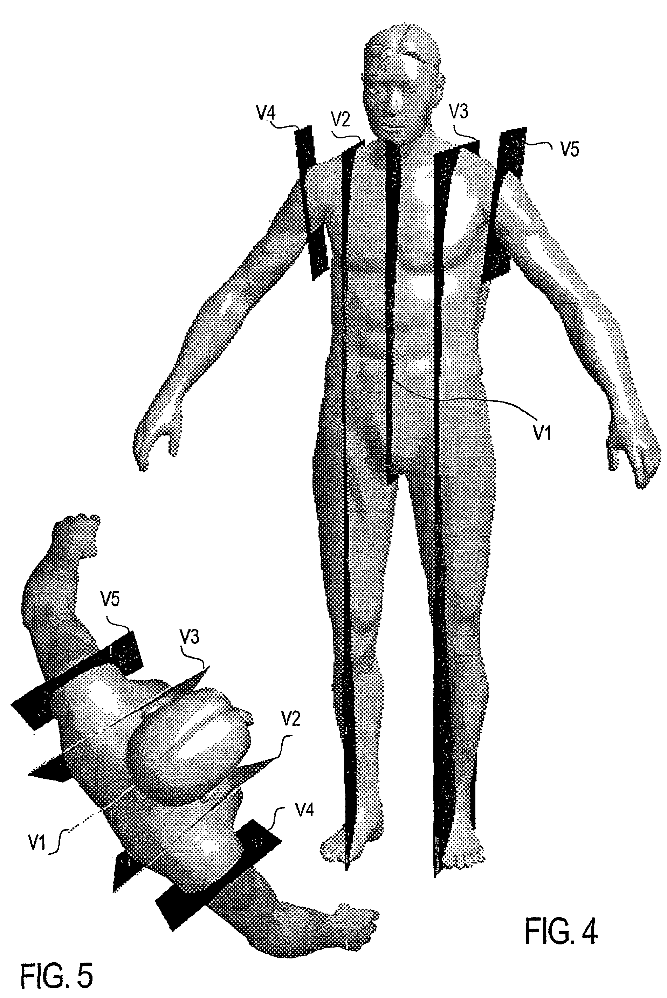

Les figures 4 et 5 illustrent le positionnement des plans verticaux spécifiques à la construction vestimentaire. Cinq plans verticaux assurent l'assise et le bon aplomb du vêtement :
- Le plan vertical V1 du milieu (de symétrie) du corps (devant/dos), fixe par état ;
- Les plans verticaux droit V2 et gauche V3 sur lesquels reposent les « points porteurs » de toute la construction vestimentaire, points situés sur la ligne d'épaule à mi-longueur entre le plan V1 et la pointe d'épaule. Le positionnement plus ou moins ouvert de ces plans (c'est-à-dire l'angle qu'ils font avec le plan V1) est lié à l'interactivité angulaire précédemment évoquée. Ces plans verticaux du « point porteur » servent par ailleurs de référence pour définir « la ligne d'aplomb » du vêtement ;
- Les plans verticaux droit V4 et gauche V5 d'emmanchure, également en interactivité angulaire, situés à la verticale de la pointe d'épaule et du creux de dessous de bras.

Le mannequin de travail ayant été précédemment construit comme indiqué, les cinq plans verticaux peuvent être affichés automatiquement sur la silhouette du mannequin pour aider aux opérations suivantes.

La notion d'aisance est fondamentale au regard du bien aller et du confort vestimentaire pour tout type et partie de vêtement. Cette aisance correspond à l'espace à ménager entre le corps et la couche vestimentaire pour pouvoir assurer une mobilité parfaite dans le port du vêtement, étant compris que la nature du matériau textile ou autre exploité, par son épaisseur propre comme par son degré d'élasticité ou de rigidité, conditionnera l'espace nécessaire (la sous-couche) à préserver entre le corps et le matériau (cette « aisance technique » peut-être nulle voire négative dans le cas de matériaux élastiques).

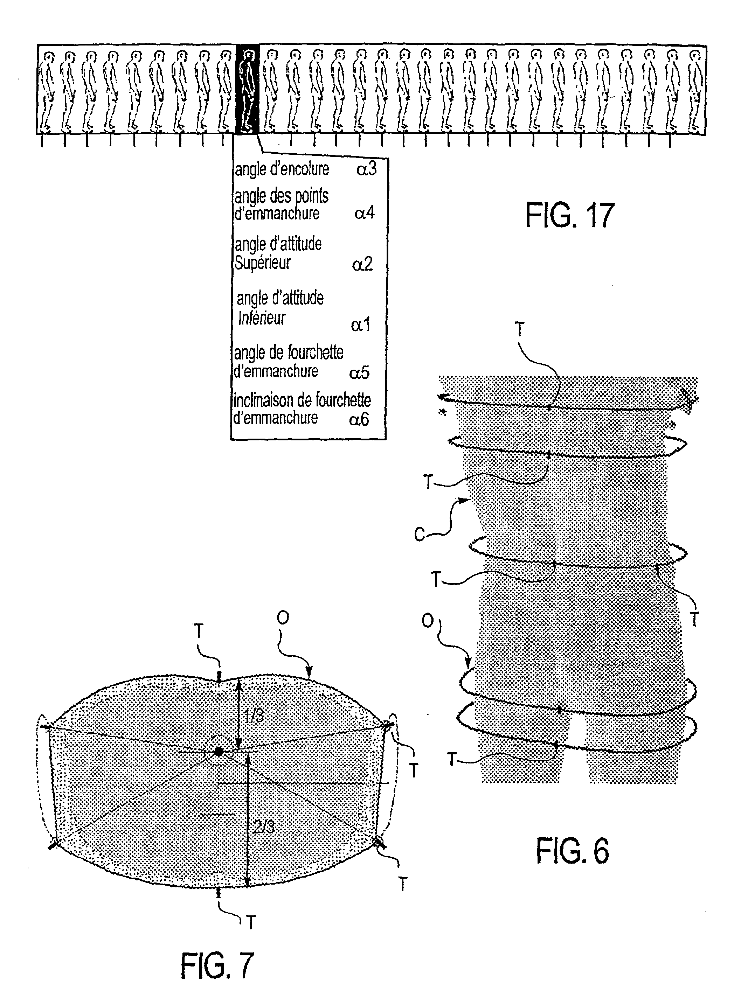

Pour répondre à cet objectif, il est prévu une boîte à outils informatique comportant des repères, ci-après appelés taquets T, qui peuvent être placés à l'endroit voulu sur la structure virtuelle O précitée comme représenté aux figures 6 et 7. Ces taquets T ont pour objet de permettre de segmenter à volonté les contours périphériques correspondant aux différents plans sus-indiqués. Chaque section ainsi délimitée correspond à une valeur d'aisance (distance entre le vêtement et le corps) à définir, l'ensemble se traduisant par une dimension périphérique de la structure virtuelle O différente de la dimension périphérique de la ligne ajustée sur le corps C du mannequin, cette ligne de redimensionnement de sous-couche étant par ailleurs lissée numériquement.

Il est possible d'additionner en épaisseur, dans des cas précis, plusieurs zones d'aisance (ex. doublure + entoilage + épaulette). L'interaction de plan à plan assure la diffusion parfaite de cette sous-couche multiple d'aisance sur l'ensemble du volume concerné.

La notion de galbe correspond au contour de surface à obtenir pour donner à la silhouette la ligne recherchée.

Au-delà de la sous-couche d'aisance, il s'agit donc de créer une seconde sous-couche de galbe variable selon la partie du vêtement à construire pour lui en conférer le style, la silhouette recherchée.

Pour ce faire, il est fait appel à la boîte à outil permettant de positionner des taquets de délimitation de zones verticales comme horizontales sur les lignes périphériques déjà existantes de la structure virtuelle O comme en relation avec de nouvelles lignes complémentaires (positionnement et nombre à volonté), cette segmentation donnant lieu à introduction de la valeur de galbe désirée se traduisant par des courbes déformables et lissables aboutissant à la silhouette désirée.

Sur cette forme galbée, certaines des courbes de construction identifiées de façon spécifique peuvent être utilisées comme lignes de jonction d'assemblage (panneaux, découpes, pinces, empiècements...).

Ce travail de stylisme effectué directement en trois dimensions peut être réalisé aussi bien sur des articles vestimentaires de buste avec ou sans manches, que sur des articles n'intéressant que les jambes (pantalons, jupes,...).

Une attention spéciale est apportée au traitement de l'aisance au niveau des articulations (épaules, coudes, hanches, genoux) pour leur assurer toute la motricité nécessaire, ce en dépit des couches vestimentaires.

Dans la mesure où le vêtement à créer comporte des manches, pour laisser toute liberté au mouvement de la charnière d'attache du bras au tronc selon l'amplitude normale, il est indispensable de donner une certaine capacité de développement au niveau de la zone d'articulation faute de quoi, ou l'articulation se trouve bloquée, ou son déplacement entraîne tout le reste du vêtement.

Le développement spécifique de l'aisance, à distribuer en éventail sur les deux parties de l'articulation vestimentaire, est réalisé selon des règles particulières à chaque cas et en fonction à la fois de la nature, du degré de rigidité-élasticité et de l'épaisseur de la matière, ainsi que du style et du degré de flottement du fourreau au niveau du point de charnière.

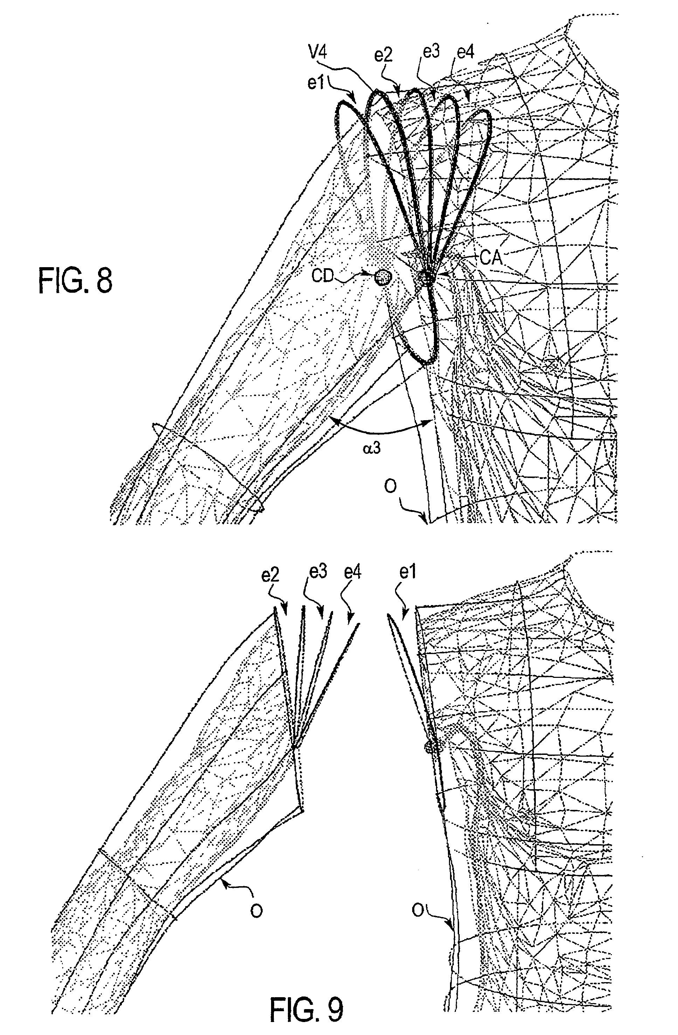

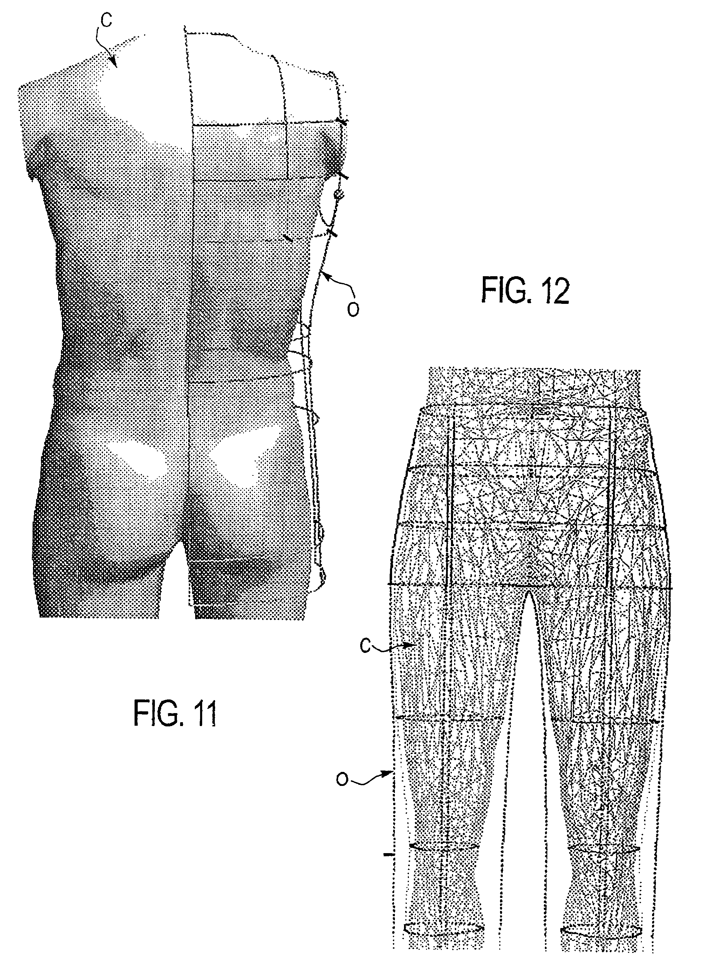

A titre d'exemple, comme représenté aux figures 8 et 9, pour la construction d'un Blazer Homme, pour une amplitude optimale normale du bras retenue comme étant de l'ordre de 90°, le calcul du développement nécessaire se fait sur la base du positionnement du bras sur la bissectrice à 45° (angle α6 à la figure 8) conduisant à donner un éventail de développement par rapport au plan vertical d'emmanchure V4 ou V5 (figure 4) de même importance, ces 45° étant distribués par quart : 11°5 en avancée d'emmanchure e1, 34°5 en complément de tête de manche e2, e3, e4. Les origines de ces développements d'aisance prennent appui sur des points de charnière avant CA et arrière CD d'emmanchure (voir également figure 10), l'aisance restant de valeur nulle sur la partie inférieure de l'emmanchure. Cette motricité de développement est réalisée automatiquement à partir du moment où se trouve saisi le degré d'angle d'ouverture retenu.

Ce qui est vrai pour le traitement de la jonction articulaire d'emmanchure, l'est également pour la jonction articulaire du coude (si le vêtement comporte des manches longues), bien que de moindre amplitude.

Il en est également de même en ce qui concerne le traitement des articulations de la jambe.

Parvenu à ce point, sont affichés à la fois le mannequin dans sa structure modifiée et, en superposition, les différentes lignes de construction, périphériques et verticales, dans leur développement choisi selon les valeurs d'aisance comme de galbe introduites, ainsi que les lignes de délimitation de zones de panneaux, faisant ainsi découvrir le développement des formes de la structure.

Comme cela est bien connu dans le domaine des techniques de modélisation, il est possible d'avoir une vision globale à la fois circulaire (dessus face, cotés, dos) par rotation, avec arrêt ponctuel à volonté, et sous différents angles de projection (figures 11 et 12) afin de pouvoir pleinement apprécier les aisances, formes et galbes ainsi introduits selon les sections et les zones, ainsi que leur cohérence et leur bien-fondé avec les lignes de construction architecturale en 3D.

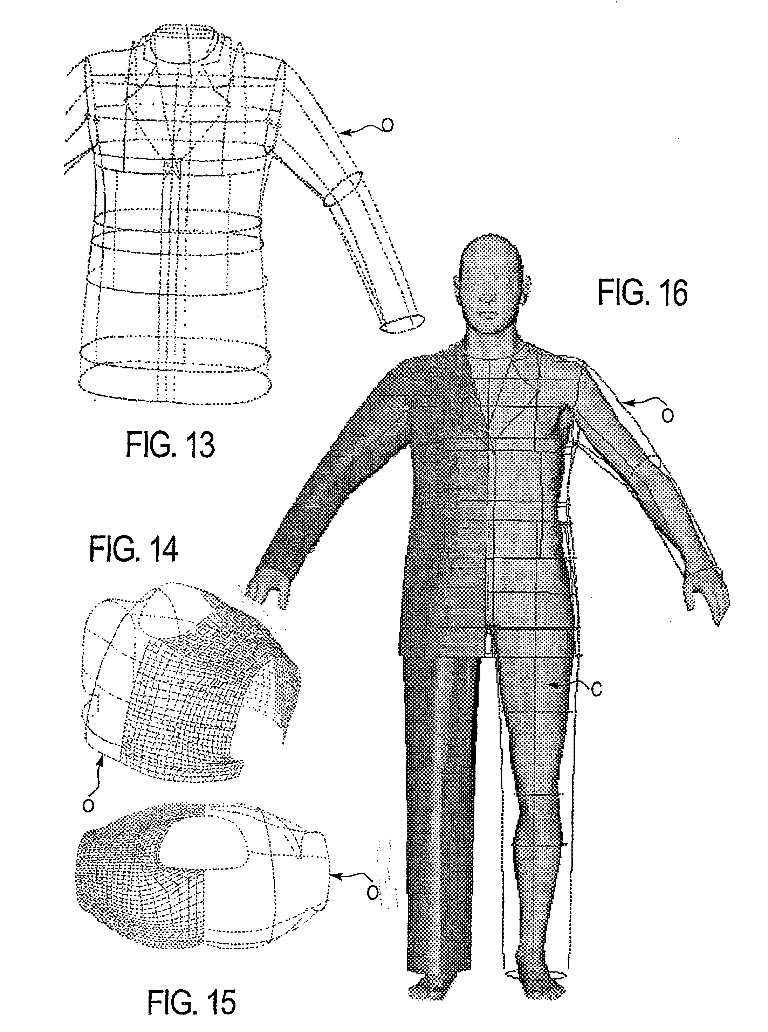

Il est également possible de visualiser en 3D et de façon orbitale, désolidarisée du mannequin, la forme maillée de la structure virtuelle O (figures 13, 14 et 15) et/ou la forme texturée de la structure virtuelle (figure 16) obtenue pour mieux apprécier la ligne générale conférée au vêtement. Cette structure virtuelle, une fois traduite en patronage de base, assurera l'unité de style et la permanence du bien aller pour tous les modèles réalisés par modification d'image de base à partir de cette forme.

Par utilisation itérative, le procédé permet d'apporter de façon très précise et à volonté les modifications et/ou ajustements souhaités avant de mémoriser la structure virtuelle O de base intégrant les données d'aisance techniques ainsi que les données de volume stylistique de silhouette introduites en assurant confort et bien-aller.

Le procédé décrit assure la possibilité de tracer sur la structure virtuelle O ainsi construite les lignes de séparation et de jonction des panneaux à réunir correspondant aux lignes ultérieures d'assemblage de couture, de pinces, de plis,...

Le procédé décrit permet, par des techniques connues, de restituer les données numériques mémorisées relatives aux coordonnées et aux lignes d'ouverture pour la mise à plat de la structure virtuelle O vers tout système compatible de réalisation CAO/DAO de patronage 2D/3D ou de commande numérique d'outil de coupe. Cette restitution assure, dans un premier temps, la mise à plat en 2D de la structure sous forme de patronage, en garantissant la validité des bases de conception et de silhouette des patronages des modèles qui en seront issus.

Sur ce patron plan pourront être apportés tous ajouts de personnalisation du modèle préalablement à son utilisation comme base de découpe des matériaux employés.

Il est à noter que le procédé décrit permet à volonté de ne travailler que sur une partie du mannequin (le tronc, le bassin, les jambes,...) en fonction de la nature du produit sur lequel l'étude est menée (gilet, blouson, pantalon, jupe,...).

Toutes les informations issues de cette construction sont stockables et modifiables à volonté sur ordinateur.

Par ailleurs, dans son application à la réalisation de mannequins d'étude comme d'essayage pour des vêtements spéciaux tels qu'uniformes, costumes de scène, vêtements de protection et de survie, le procédé décrit permet de s'assurer du bien fondé des normes techniques d'aisance, comme de leur positionnement très précis à faire figurer dans le cahier des charges.

Le procédé décrit s'appliquant à toutes formes d'articles vestimentaires pour Homme, Femme, Enfant, il peut être prévu dans la « boîte à outil » des accessoires d'application répondant soit à des zones naturelles mais variables de galbe du corps (profondeur de bonnets/écart de pointes et hauteur de seins poitrine Femme), soit à des modifications artificielles mais volontaires de silhouette du corps proprement dit (soutien-gorge, épaulette, padding...). Sur appel de ces additifs, ceux-ci viennent se plaquer sur le corps de base, dans le positionnement précis désiré, pour en modifier les données dimensionnelles et profilées.

Le procédé décrit permet de tenir compte, par approches successives, de superpositions de sous-couches- additionnelles ( notion de strate ), par le fait de vêtements se portant les uns sur les autres, et/ou par le fait de l'épaisseur caractérisant telle ou telle matière incorporée (fourrure, ouatinage...). De même, il permet de tenir compte des marges d'aisance nécessaires et suffisantes pour tous les vêtements techniques en fonction de leurs spécificités d'emploi (vêtements de protection, de survie...).

Le procédé décrit s'applique aussi bien à un mannequin unique, considéré comme une référence, que sur un mannequin individualisé par le transfert préalable des données dimensionnelles et morphologiques spécifiques à tel ou tel sujet, ainsi que sur toute série de mannequins représentatifs d'une gamme de développement de tailles dimensionnelles différentes intégrant ou non des variations d'attitudes comme de conformations.

Dans cette phase de développement de tailles (opération de gradation), la sous-couche d'aisance se positionne automatiquement selon les mêmes valeurs absolues d'écart avec les mesures du corps que celles retenues pour le mannequin de travail taille de base tandis que les mesures de la structure virtuelle galbée suivront proportionnellement les variations des mesures des corps successivement gradés selon leurs tailles.

Dans la mesure où l'étude de conception ou de construction pour un vêtement donné est réalisée sur une définition de référence (taille de référence), le procédé permet, sur une grille appelable en fenêtre, de saisir manuellement et d'afficher des variations des données au niveau de chaque paramètre clé de mesure (plans et longueurs), et de faire apparaître, face à la donnée de référence, la modification introduite. Tout changement de cette nature se traduira automatiquement à la fois par une transformation de la structure virtuelle en terme de variation volumétrique (en plus ou en moins) mais également en terme de compensation de gravité donc de répartition angulaire.

En validant cette étape, un affichage donnera l'aspect réel du corps ainsi qu'un ensemble de courbes relatives aux commandes initiales d'un patronage.

La structure virtuelle de référence s'en trouvera automatiquement transformée en conservant ses caractéristiques d'aisance et de galbe.

## Revendications

1. Procédé de conception numérique de vêtement sur ordinateur, **caractérisé en ce qu'**il comprend les étapes consistant à :
a) importer des données numériques tridimensionnelles représentatives d'au moins une partie du corps d'un mannequin virtuel de travail (C),
b) élaborer des données numériques tridimensionnelles représentatives d'une structure virtuelle (O) comprenant une série de lignes disposées chacune dans l'un de plusieurs plans de coupe transversaux (L1-L20) et longitudinaux (V1-V5) dudit corps de mannequin virtuel de travail (C), lesdites lignes étant en chaque point espacées d'une distance déterminée de la surface dudit corps (C),
c) générer et afficher sélectivement à partir desdites données numériques au moins une image d'au moins une zone de l'un au moins des éléments comprenant ladite structure virtuelle (O) et ladite partie dudit corps de mannequin virtuel de travail (C),
d) modifier sélectivement en différents points (T) de ladite structure virtuelle (O) ladite distance entre lesdites lignes et ladite surface pour générer une structure virtuelle personnalisée représentative dudit vêtement, et à
e) modifier ladite image en fonction desdites modifications apportées à ladite structure virtuelle (O).

2. Procédé selon la revendication 1, **caractérisé en ce que** ladite étape a) comprend :
a1) l'importation de données numériques tridimensionnelles représentatives d'au moins une partie d'un corps de mannequin virtuel spécifique,
a2) la modification sélective d'au moins un paramètre morphologique dudit corps de mannequin virtuel spécifique pour générer et afficher sélectivement au moins une partie dudit corps modifié constituant ledit corps de mannequin virtuel de travail (C).

3. Procédé selon la revendication 2, **caractérisé en ce que** lesdites données numériques tridimensionnelles représentatives d'au moins une partie dudit corps de mannequin virtuel spécifique comprennent un ensemble de paramètres prédéterminés de dimension et de position angulaire (α1, α2, β1) dudit corps de mannequin virtuel spécifique et **en ce que** ladite étape a2) consiste à modifier au moins l'un desdits paramètres.

4. Procédé selon la revendication 3, **caractérisé en ce que** ladite étape a2) consiste, en réponse à la modification d'au moins l'un des paramètres prédéterminés de dimension et de position angulaire (α1, α2, β1) dudit corps de mannequin virtuel spécifique, à faire varier d'autres parmi lesdits paramètres prédéterminés de dimension et de position angulaire dudit corps de mannequin virtuel spécifique, conformément à une règle prédéterminée.

5. Procédé selon l'une quelconque des revendications 2 à 4, **caractérisé en ce qu'**il comprend l'étape consistant à adapter automatiquement lesdites données numériques représentatives de ladite structure virtuelle (O) en réponse à ladite modification d'au moins un paramètre morphologique dudit corps de mannequin virtuel spécifique.

6. Procédé selon la revendication 5, **caractérisé en ce qu'**il comprend l'étape consistant à rapporter au moins un volume de forme déterminée à la surface dudit corps de mannequin virtuel spécifique et à adapter automatiquement lesdites données numériques représentatives de ladite structure virtuelle (O) en réponse à la modification dudit corps de mannequin virtuel spécifique par apport dudit volume.

7. Procédé selon l'une quelconque des revendications 2 à 6, **caractérisé en ce que** ladite étape a1) comprend :
a1-1) la capture en trois dimensions d'un corps volumétrique considéré comme de référence correspondant à un certain profil pour conduire à l'obtention d'un mannequin virtuel brut ;
a1-2) le déplacement maîtrisé des « vertex» du maillage de ce mannequin virtuel brut, de manière à obtenir un mannequin virtuel déformable ; et
a1-3) la transformation de ce mannequin virtuel déformable afin de lui conférer les caractéristiques spécifiques de mensurations et de profil d'une cible particulière d'individu.

8. Procédé selon la revendication 7, **caractérisé en qu'**on réalise ladite transformation à partir de paramètres morphologiques, ces paramètres étant sélectivement prélevés sur une personne vivante choisie comme base d'étude, ou choisis dans une base de données morphologiques.

9. Procédé selon l'une quelconque des revendications précédentes, **caractérisé en ce que** ladite étape d) consiste à identifier lesdits points (T) sur ladite image de ladite structure virtuelle (O) et à commander sélectivement la modification de ladite distance auxdits points identifiés.

10. Procédé selon la revendication 9, **caractérisé en ce que** ladite étape d) comprend le lissage numérique de la surface de ladite structure virtuelle (O) entre des points (T) adjacents dont la distance audit corps de mannequin virtuel de travail (C) a été modifiée sélectivement.

11. Procédé selon l'une quelconque des revendications précédentes, **caractérisé en ce qu'**il comprend l'étape consistant à tracer sur ladite image de ladite structure virtuelle (O) et à mémoriser des lignes d'ouverture de ladite structure pour la mise à plat en deux dimensions dudit vêtement.

## Patentansprüche

1. Verfahren zum numerischen Entwerfen eines Kleidungsstückes mittels eines Rechners, **dadurch gekennzeichnet, dass** es die folgenden Schritte aufweist:
a) Einführen dreidimensionaler numerischer Daten, die zumindest einen Teil des Körpers eines virtuellen Arbeitsmannequins (C) darstellen,
b) Erarbeiten dreidimensionaler numerischer Daten, die eine virtuelle Struktur (O) mit einer Reihe von Linien darstellen, die jeweils in einer von mehreren querverlaufenden (L1-L20) und längsverlaufenden (V1-V5) Schnittebenen des Körpers des virtuellen Arbeitsmannequins (C) angeordnet sind, wobei die Linien in jedem Punkt einen vorgegebenen Abstand zu der Oberfläche des Körpers (C) haben,
c) wahlweises Erzeugen und Darstellen, ausgehend von den besagten numerischen Daten, mindestens eines Bildes mindestens eines Bereiches mindestens eines der aus der virtuellen Struktur (O) und dem besagten Teil des Körpers des virtuellen Arbeitsmannequins (C) bestehenden Elemente,
d) wahlweises Modifizieren des Abstandes zwischen den besagten Linien und der Oberfläche an verschiedenen Punkten (T) der virtuellen Struktur (O), um eine die Kleidung darstellende personalisierte virtuelle Struktur zu erzeugen, und
e) Modifizieren des Bildes in Abhängigkeit von den an der virtuellen Struktur (O) vorgenommenen Modifikationen.

2. Verfahren nach Anspruch 1, **dadurch gekennzeichnet, dass** der Schritt a) aufweist:
a1) Einführen dreidimensionaler numerischer Daten, die zumindest einen Teil eines Körpers eines speziellen virtuellen Mannequins darstellen,
a2) wahlweises Modifizieren mindestens eines morphologischen Parameters des Körpers des speziellen virtuellen Mannequins, um zumindest einen Teil des modifizierten Körpers, der den Körper des virtuellen Arbeitsmannequins (C) bildet, wahlweise zu erzeugen und darzustellen.

3. Verfahren nach Anspruch 2, **dadurch gekennzeichnet, dass** die zumindest einen Teil des Körpers des speziellen virtuellen Mannequins darstellenden dreidimensionalen numerischen Daten eine Gruppe vorgegebener Parameter hinsichtlich Abmessungen und Winkellage (α1, α2, β1) des Körpers des speziellen virtuellen Mannequins aufweisen und dass der Schritt a2) darin besteht, mindestens einen dieser Parameter zu modifizieren.

4. Verfahren nach Anspruch 3, **dadurch gekennzeichnet, dass** der Schritt a2) darin besteht, in Abhängigkeit von der Modifikation mindestens eines der vorgegebenen Parameter hinsichtlich Abmessungen und Winkellage (α1, α2, β1) des Körpers des speziellen virtuellen Mannequins andere der vorgegebenen Parameter hinsichtlich Abmessungen und Winkellage des Körpers des speziellen virtuellen Mannequins nach einer vorgegebenen Regel zu variieren.

5. Verfahren nach einem der Ansprüche 2 bis 4, **dadurch gekennzeichnet, dass** es einen Schritt umfasst, der darin besteht, die die virtuelle Struktur (O) darstellenden numerischen Daten in Abhängigkeit von der Modifikation mindestens eines morphologischen Parameters des Körpers des speziellen virtuellen Mannequins automatisch anzupassen.

6. Verfahren nach Anspruch 5, **dadurch gekennzeichnet, dass** es einen Schritt umfasst, der darin besteht, mindestens ein Volumen vorgegebener Form mit der Oberfläche des Körpers des speziellen virtuellen Mannequins in Beziehung zu setzen und die die virtuelle Struktur (O) darstellenden numerischen Daten in Abhängigkeit von der Modifikation des Körpers des speziellen virtuellen Mannequins bezüglich des Volumens automatisch anzupassen.

7. Verfahren nach einem der Ansprüche 2 bis 6, **dadurch gekennzeichnet, dass** der Schritt a1) umfasst:
a1-1) dreidimensionales Einfangen eines betrachteten volumetrischen Körpers als Referenz entsprechend einem bestimmten Profil, um ein virtuelles Rohmannequin zu erhalten;
a1-2) kontrolliertes Verschieben der "Vertex" des Netzwerkes dieses virtuellen Rohmannequins derart, dass ein verformbares virtuelles Mannequin erhalten wird; und
a1-3) Transformation dieses verformbaren virtuellen Mannequins, um ihm spezielle Maß- und Profileigenschaften eines speziellen Soll-Individuums zu verleihen.

8. Verfahren nach Anspruch 7, **dadurch gekennzeichnet, dass** die Transformation ausgehend von morphologischen Parametern erfolgt, wobei diese Parameter von einer als Lernbasis gewählten lebenden Person wahlweise abgenommen oder in einer Datenbank morphologischer Daten ausgewählt werden.

9. Verfahren nach einem der vorhergehenden Ansprüche, **dadurch gekennzeichnet, dass** der Schritt d) darin besteht, die Punkte (T) auf dem Bild der virtuellen Struktur (O) zu identifizieren und die Modifikation des Abstandes zu den identifizierten Punkten wahlweise zu steuern.

10. Verfahren nach Anspruch 9, **dadurch gekennzeichnet, dass** der Schritt d) die numerische Glättung der Oberfläche der virtuellen Struktur (O) zwischen benachbarten Punkten (T) umfasst, deren Abstand zum Körper des virtuellen Arbeitsmannequins (C) wahlweise modifiziert wurde.

11. Verfahren nach einem der vorhergehenden Ansprüche, **dadurch gekennzeichnet, dass** es einen Schritt umfasst, der darin besteht, Öffnungslinien der Struktur auf dem Bild der virtuellen Struktur (O) zur ebenen Darstellung der Kleidung in zwei Dimensionen zu ziehen und zu speichern.

## Claims

1. A method of digitally designing clothes on a computer, **characterized in that** it includes the steps of:
a) importing three-dimensional digital data representative of at least one portion of the body (C) of a working virtual mannequin,
b) generating three-dimensional digital data representative of a virtual structure (O) including a series of lines disposed each in one of a plurality of transverse (L1-L20) and longitudinal (V1-V5) section planes of said working virtual mannequin body (C), said lines being at each point spaced by a particular distance from the surface of said body (C),
c) selectively generating and displaying from said digital data at least one image of at least one area of at least one of the elements comprising said virtual structure (O) and said portion of said working virtual mannequin body (C),
d) selectively modifying at various points (T) of said virtual structure (O) said distance between said lines and said surface to generate a personalized virtual structure representative of said garment, and
e) modifying said image as a function of said modifications made to said virtual structure (O).

2. A method according to claim 1, **characterized in that** said step a) comprises:
a1) importing three-dimensional digital data representative of at least one portion of a specific virtual mannequin body, and
a2) selectively modifying at least one morphological parameter of said specific virtual mannequin body to generate and display selectively at least one portion of said modified body constituting said working virtual mannequin body (C).

3. A method according to claim 2, **characterized in that** said three-dimensional digital data representative of at least one portion of said specific virtual mannequin body include a set of predetermined parameters (α1, α2, β1) for dimensions and angular positions of said specific virtual mannequin body and **in that** said step a2) consists of modifying at least one of said parameters.

4. A method according to claim 3, **characterized in that**, in response to the modification of at least one of the predetermined dimension and angular position parameters (α1, α2, β1) of said specific virtual mannequin body, said step a2) consists in varying others of said predetermined dimension and angular position parameters of said specific virtual mannequin body in accordance with a predetermined rule.

5. A method according to any of claims 2 to 4, **characterized in that** it includes the step of automatically adapting said digital data representative of said virtual structure (O) in response to said modification of at least one morphological parameter of said specific virtual mannequin body.

6. A method according to claim 5, **characterized in that** it includes the step of transferring at least one volume of determined shape to the surface of said specific virtual mannequin body and automatically adapting said digital data representative of said virtual structure (O) in response to the modification of said specific virtual mannequin body caused by adding said volume.

7. A method according to any of claims 2 to 6, **characterized in that** said step a1) comprises:
a1-1) capturing in three dimensions a volumetric body considered as a reference corresponding to a certain profile to obtain a raw virtual mannequin;
a1-2) controlled displacement of "vertices" of the meshing of said raw virtual mannequin to obtain a deformable virtual mannequin; and
a1-3) transforming said deformable virtual mannequin in order to confer on it specific measurement and profile characteristics of a particular target person.

8. A method according to claim 7, **characterized in that** said transformation is based on morphological parameters that are taken selectively from a living person chosen as a basis for a design or chosen in a morphological database.

9. A method according to any preceding claim, **characterized in that** said step d) consists of identifying said points (T) on said image of said virtual structure (O) and selectively commanding modification of said distance to said identified points.

10. A method according to claim 9, **characterized in that** said step d) comprises digitally smoothing the surface of said virtual structure (O) between adjacent points (T) whose distance from said working virtual mannequin body (C) has been modified selectively.

11. A method according to any preceding claim, **characterized in that** it includes a step of tracing on said image of said virtual structure (O) and memorizing lines for opening out said structure to flatten out said garment into two dimensions.
